# EUROPEAN PATENT SPECIFICATION

(11) **EP 3 612 466 B1**
(45) Date of publication and mention of the grant of the patent: **27.09.2023**
(21) Application number: 18722866.3
(22) Date of filing: 19.04.2018
(51) Int. Cl.: B65D 75/58, B65D 47/20, B65D 35/40, G01F 11/08

(54) **PROFILE VALVE AND PACKAGE FOR LIQUID METERING AND DISPENSING**
PROFILVENTIL UND VERPACKUNG ZUR DOSIERUNG UND AUSGABE VON FLÜSSIGKEIT
VALVE PROFILÉE ET EMBALLAGE POUR DOSAGE ET DISTRIBUTION DE LIQUIDE

(30) Priority: 20.04.2017 US 201762487598 P; 20.04.2017 US 201762487608 P; 26.04.2017 US 201762490258 P; 27.04.2017 US 201762490686 P; 02.05.2017 US 201762500123 P; 14.08.2017 US 201762545229 P
(43) Date of publication of application: 26.02.2020
(73) Proprietor: Illinois Tool Works, Inc., Glenview, Illinois 60025 (US)
(72) Inventor: LUDWIG, Christopher, Glenview IL 60025 (US); LEIGHTON, Murray, Edward Bruce, Glenview IL 60025 (US)
(74) Representative: HGF
(86) International application number: PCT/US2018/028327
(87) International publication number: WO 2018/195294

(56) References cited:
- WO-A1-2008/112737
- WO-A1-2016/164185
- AU-A- 5 781 980
- DE-B- 1 017 080
- US-A- 2 802 604

## Description

### BACKGROUND OF THE DISCLOSURE

### Field of the Disclosure

The present disclosure relates to a flexible container, bottle or bag with a one-way valve adjacent to a pressure close tight or bubble valve, operating as a dispensing valve, in order to provide a metered dosing element. The present disclosure further relates to a dispensing valve for flexible packaging, using a profile as a valve which requires internal pressure to overcome the seal effect or bias of the profile thereby allowing for metering of the contents of a flexible package.

### Description of the Prior Art

Prior art packaging in the food/beverage, personal care and household care industries is primarily a combination of a rigid bottle or semi-flexible tube with a rigid fitment or cap of varying dispense types. Transition to flexible pouches for the main body of the container has continued to utilize similar, still rigid, fitments. There exists a need within these industries to complete the transition in order to create a fully flexible solution.

Prior art embodiments of a plastic valve for flexible pouches required many manufacturing steps, material, and time. First, a rectangular pocket of ambient air is trapped between two sheets of plastic film, Then the pocket is repeatedly condensed in footprint by the use of successive heat seals on pouch making equipment, Reduction of the area gradually increases the amount of internal pressure within the formed bubble. There exists a need for a method of manufacturing a bubble in flexible packaging using less manufacturing steps, material, and time.

The prior art includes U.S. Patent No. 8,613,547 entitled "Packages Having Bubble-Shaped Closures"; U.S. Patent No. 7,883,268 entitled "Package Having a Fluid Activated Closure"; U.S. Patent No. 7,207,717 entitled "Package Having a Fluid Activated Closure"; U.S. Published Application 2016/0297571 entitled "Package Valve Closure System and Method": U.S. Published Application 2011/0200275 entitled "Package Containing a Breachable Bubble in Combination with Closure Device"; PCT/US2015/058030 entitled "Closure for a Reclosable Package with ai Air Pocket Formed on a Flange"; and European Patent Application EP 1812318 B entitled "Package Having a Fluid Actuated Closure."

A related application is PCT US/17/6 1500 entitled "Bubble Valve for Flexible Packaging." AU5781980A relates to a toothpaste tube metering device and is the basis for the preamble of present claims 1 and 2. DE1017080B relates to a device for the metered removal of paste-like and low-viscosity substances from tubes and containers. US2802604A relates to a device for dispensing and applying predetermined quantities of a flowable material. WO2016164185A1 relates to a package including at least one valve or closure device provided at an access opening of the package.

### OBJECTS AND SUMMARY OF THE DISLCOSURE

It is therefore an object of the present disclosure to provide a profile on a web of film to create a pressure-activated dispensing valve which is easy to manufacture and which can be applied with known applicator designs.

It is therefore a further object of the present disclosure to provide an improved valve, including metering and dispensing, for customer applications. These and other objects are attained by providing a valve made of a channel and typically one or two bubble valves that can be attached to a flexible package to enable the controlled release of products by means of applying pressure. Embodiments with a single bubble may further include a one-way non-bubble valve to introduce product or contents into a dispensing chamber, for subsequent dispensing of a metered amount of product through the single bubble valve.

In a presently contemplated valve for permitting selective metering and dispensing of contents of a package, bubble valves are made of at least three layers a channel layer (typically formed from a first or front co-extensive polymeric panel), at least one bubble layer or interior layer, and a base layer (typically formed from a second or rear co-extensive polymeric panel) . Bubbles are formed between the base layer and the bubble layer.
Channels are formed between the bubble layer and the channel layer. A physical characteristic of the bubbles biases the channels towards a closed position that restricts flow of contents from the inlet to the outlet.

In a presently contemplated method of forming a bubble valve, a bubble is formed between the base layer and the bubble layer by applying a bubble seal between the layers and enclosing an enclosed material in the bubble. A channel is formed between the bubble layer and the channel layer. The channel includes an inlet and an outlet. The bubble includes a physical characteristic that restricts flow of contents from the inlet to the outlet.

In a presently contemplated package for retaining and dispensing contents to a user, the package includes a one-way valve and a dispensing valve, with a metering volume therebetween. The one-way valve is configured as a first bubble valve, and the dispensing valve may be configured as a second bubble valve or as another configuration of a valve. The internal volume is defined between a rear panel portion and a front panel portion, and between the one-way valve and the dispensing valve.

### BRIEF DESCRIPTION OF THE DRAWINGS.

Further objects and advantages of the disclosure will become apparent from the following description and from the accompanying drawings, wherein:
Figure 1 is a side plan view of a container with an embodiment of the profile valve of the current disclosure.
Figure 2 is a detailed view of a portion of Figure 1.
Figure 3 is a cut-away view of an exemplary profile valve. Figure 3 does not form part of the claimed invention.
Figure 4 is an end plan view of a container with an embodiment of the profile valve of the current disclosure.
Figure 5 is an exemplary detailed view of a portion of Figure 4, wherein this embodiment is not according to the present invention.
Figure 6 is an exemplary cut-away view of an alternative embodiment of the profile valve, wherein this embodiment is not according to the present invention.
Figure 7 is an exemplary ecut-away view of a second alternative embodiment of the profile valve not according to the invention.
Figure 8 is an exemplary ecut-away view of a third alternative embodiment of the profile valve not according to the invention.
Figure 9 is a cut-away view of an alternative example of the profile valve. Figure 9 does not form part of the claimed invention.
Figure 10 is a cut-away view of an alternative example of the profile valve. Figure 10 does not form part of the claimed invention.
Figure 11 is a cut-away view of an alternative example of the profile valve. Figure 11 does not form part of the claimed invention.

### DETAILED DESCRIPTION OF THE PREFERRED EMBODIMENTS

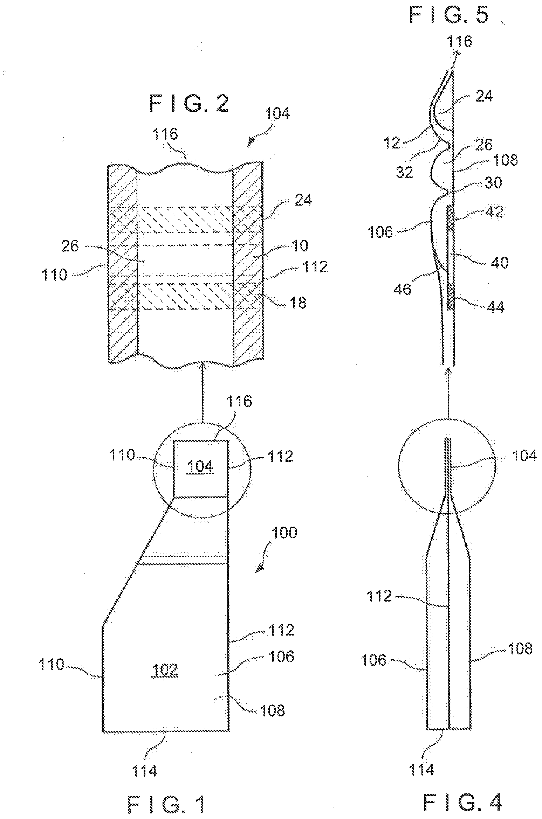

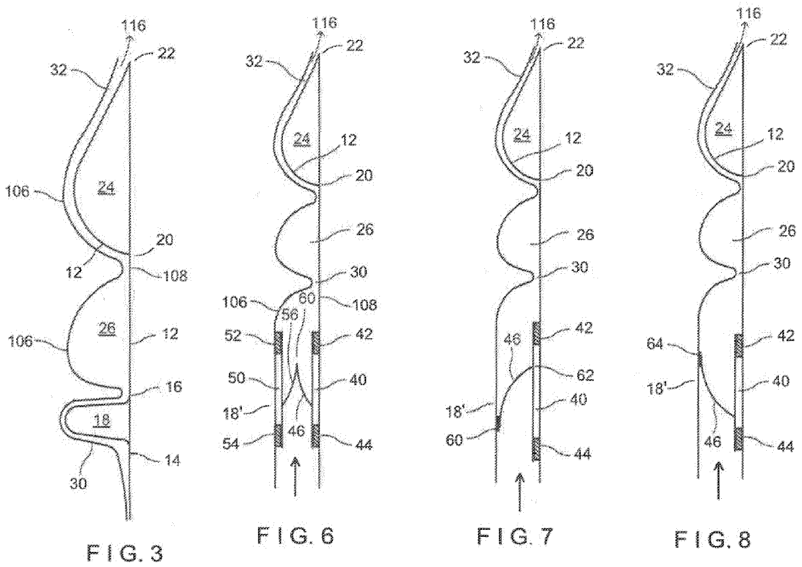

The subject matter shown in figures 3, 5, 7, 8, 9 and 11 and described hereinafter does not fall within the scope of the claims. The embodiments concerned do not form part of the invention but represent the background art that is useful for understanding the invention. Referring now to the drawings in detail, wherein like numerals indicate like elements through the several views, one sees that Figures 1 and 2 - illustrate an embodiment of a package or pouch 100 utilizing the one-way metering valve structure 10 of the present disclosure. The illustrated pouch 100 includes a lower enlarged storage volume 102 and an upper neck (or storage access portion) 104, typically formed from first and second coextensive sheets of polymeric material 106, 8 forming first and second panel portions, The interior of upper neck 104 houses the metering valve structure and further provides a pathway from the storage volume 102 to the exterior of the package 100. As shown in Figure 2, vertical seals 110, 112 seal together the edges of first and second polymeric sheets 106, 108 and the edges of the metering valve structure 10. A bottom seal (or fold) 4 joins the lower edges of the first and second polymeric sheets 106, 108 to form the lower boundary of the lower enlarged storage volume 102. At the uppermost portion of upper neck 104, the portions of first and second co-extensive sheets of polymeric material 106, 108 between first and second side seals 110, 112 are not sealed together in the area, thereby forming a dispensing mouth 116, with exiting flow controlled by metering valve structure 10, Many products may be held within storage volume 102 and dispensed through dispensing mouth 116, including, but not limited to, clothes washer detergents or concentrated cleaners, particularly those which need to be measured and added to water prior to use.

As best illustrated in Figure 3, the second or rear polymeric sheet 108 forms the base layer of the one-way metering valve structure 10. A bubble film layer 12 is sealed to the base film layer (alternately referred to as the second or rear polymeric sheet, however some embodiments may have a bubble film layer which is separate from the second or rear polymeric sheet) 108 at the product side metering bubble scam 14 and the consumer side metering bubble seam 16 thereby allowing the bubble film layer 12 to form a one-way metering bubble 18 configured as a protruding closure device, which is filled with air or another gas, fluid or liquid. The bubble film layer 12 is further included within the first and second side seals 110, 112 along the length of metering valve structure 10. A s shown in Figure 2, the metering bubble 18 extends from the first side seal 110 to the second side seal 112.

Bubble film 12 continues along base film layer 108 and is sealed to base film layer 108 at product side dispensing bubble seam 20, and further sealed to bubble film layer 108 to form consumer side dispensing bubble seam 22. Dispensing bubble 24 is bounded between the base film layer 108 and the bubble film layer 12, between the product side dispensing bubble seam 20 and the consumer side dispensing bubble seam 22, and between the first and second side seals 110, 112, thereby allowing the bubble film layer 12 to form dispensing bubble 24 (configured as a pressure close tight valve and a protruding closure device), which is filled with air or another gas, fluid or liquid.

The bubbles 18, 24 include an enclosed material. The enclosed material is trapped between the base film layer 108 (i.e., a first exterior layer) of film and the bubble film layer 12 (i.e., at least one interior layer) of film to create the bubbles 18, 24 of a desired shape and size. In some embodiments, the enclosed material is a gas or a liquid. In such embodiments, the pressure of the liquid or the gas is a physical characteristic of the bubbles 18, 24 that biases the channel 14 from an open position towards a closed position. In one embodiment, the enclosed material is ambient air trapped during sealing of the layers 108, 12. In another embodiment, the enclosed material further includes added supplemental, pressurized, or inflated air. In yet another embodiment, the enclosed material inside the bubbles 18, 24 is a solid such as, for example, but not limited to, a urethane sponge or a rubber nub. In such embodiments, the elasticity of the solid imparts or affects a physical characteristic of the bubbles 18, 24. The shaping and dimensions of the bubbles 18, 24 and the film types of the layers 108, 12 can be customized to the specific needs of the product and/or consumer or user requirements. Such specific needs include, for example, but are not limited to, opening force of the valve structure 10, closing (i.e., shut-off) force of the valve 10, flow characteristics (i.e., opening/closing responsiveness) of the valve 10, and viscosity of contents (if liquid; solid contents are also possible) in a package.

As further shown in Figure 3, the first or front polymeric sheet 106 forms the channel layer of the metering valve structure 10. The dispensing chamber 26 is defined between first or front co-extensive polymeric sheet 106 (i.e., channel layer) and bubble film layer 12 (in combination with second or rear co-extensive polymeric sheet 108 or base layer) generally between the metering bubble 18 and the dispensing bubble 24. That is, the entrance channel 30 to dispensing chamber 26 is formed between the metering bubble 18 and the channel film layer 106. Likewise, the exit channel 32 from dispensing chamber 26 to dispensing mouth 116 is formed between dispensing bubble 24 and channel film layer 106. A physical characteristic (e.g., inflation, pressure, height, or elasticity) of the metering bubble 18 and the dispensing bubble 24, along with the tautness of the film layers 12, 106, 108 induced by the first and second side seams 110, 112, urges the metering bubble 18 and dispensing bubble 24 in a straight unbent configuration and further urges the channel layer 106 in a taut configuration against the metering bubble 18 and the dispensing bubble 24 so that consumer product is not dispensed in the absence of external force. Additionally, the material forming the dispensing chamber 26 on first or front co-extensive polymeric sheet 106 may be of increased stiffness in order to bias the dispensing chamber 26 toward its illustrated shape. Thermoforming of this material, along with partial sealing of the first or front co-extensive polymeric sheet 106 may be used in some embodiments.

Additionally, gradation lines to be used as a ruler or meter, may be added to the first and/or second polymeric sheets 106, 108 within the area of the dispensing chamber 26 in order to allow the user to determine or approximate the amount of product in dispensing chamber 26.

In order to dispense product from the lower enlarged storage volume 102 through dispensing mouth 116, the user would first apply pressure to the product from lower enlarged storage volume 102 into dispensing chamber 26 by squeezing lower enlarged storage volume 102 thereby creating enough pressure to urge a metered amount of product through entrance channel 30 (overcoming the bias of the metering bubble 18 to otherwise form a closed configuration with channel layer 106) into dispensing chamber 26, as illustrated in phantom in Figure 3. The flow of the consumer product would be stopped by metering dispensing bubble 24 due to the physical characteristics (e.g., inflation, pressure, height, or elasticity)of the metering and dispensing bubbles 18, 24 and the tautness of the film layers 12, 106, 108 induced by the first and second side seams 110, 112. Then, in order to dispense product from dispensing chamber 26 through exit channel 32 and finally through dispensing mouth 116, the user would squeeze the dispensing chamber 26 directly thereby creating enough pressure to overcome the bias of the dispensing bubble 24 to otherwise form a closed configuration with the channel layer 106. This forces the metered amount of consumer product through exit channel 32 and thereby through dispensing mouth 116.

Alternative embodiments are illustrated in Figures 5-11 wherein the one-way metering bubble 18 is replaced by an alternative metering structure which is typically configured as a substantially one-way valve. In the alternative embodiment illustrated in Figure 5, metering structure 18' comprises a vertical flange 40 which is sealed at first and second ends 42, 44 to the second sheet of polymeric material 108 (or base film layer). A sealing lip 46 extends from vertical flange 40 and presses against the first sheet of polymeric material 106.

In the alternative embodiment Illustrated in Figure 6, metering structure 18' comprises a first vertical flange 40 which is sealed at first and second ends 42, 44 to the second sheet of polymeric material 108 (or base film layer) thereby forming a first profile and a second vertical flange which is sealed a first and second ends 52, 54 to the first sheet of polymeric material 106 (or channel layer) thereby forming a second profile. A first sealing lip 46 extends from first vertical flange 40 and a second sealing lip 56 extends from second vertical flange 50 whereby the distal ends of first and second sealing lips 46 56 could be frangibly joined together at apex 60.

In the alternative embodiment illustrated in Figure 7, sealing lip 46 is sealed to first sheet of polymeric material 106 (or channel layer) a sealing point 60 and could be frangibly joined to vertical flange 40 at point 62.

In the alternative embodiment illustrated in Figure 8, the structure is similar to that of Figure 5, except that a peel seal 64 could frangibly join the distal end of sealing p 46 to the first sheet of polymeric material 106 (or channel layer).

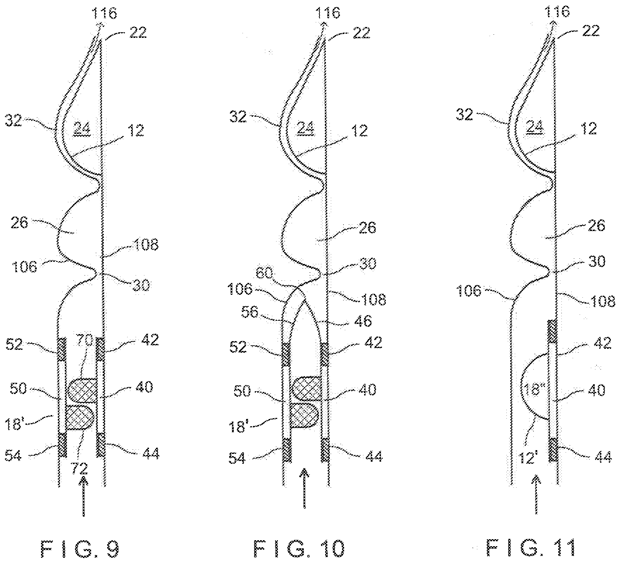

The embodiments described below do not form part of the invention but represent the background art that is useful for understanding the invention. In the alternative embodiment illustrated in Figure 9, first and second semi-rigid profiles 70, 72 are attached to respective first and second vertical flanges 40, 50, The first and second semi-rigid profiles 70, 72 are somewhat vertically offset (in the illustrated orientation) from each other and press against each other to provide the desired one-way valve function.

In the embodiment illustrated in Figure 10, first and second sealing lips 46, 56 extend from respective first and second semi-rigid profiles 70, 72 whereby the distal ends of first and second sealing lips 46, 56 could be frangibly joined together at apex 60.

The alternative embodiment illustrated in Figure 11 is similar in structure and function to the embodiment of Figure 3. The one-way metering bubble 18" is formed by attaching a bubble layer segment 12' to the vertical flange 40, wherein the vertical flange 40 is sealed to the second sheet of polymeric material 108 (or base film layer) at first and second
ends 42, 44. This configuration of one-way metering bubble 18" is particularly adapted to formation with a torpedo extrusion die (not shown).

A possible method and apparatus for manufacturing the valve structure 10 is described herein. Additional details can be drawn from related application PCT/US17/61500, entitled "Bubble Valve for Flexible Packaging." The polymeric or similar sheet material for the base film layer 108, bubble film layer 12, and channel film layer 106 are provided by unwinds or spools. The metering bubble 18 and the dispensing bubble 24 are formed by a first thermoformer in at least the bubble layer 12. In one embodiment, the bubbles 18, 24 are formed using both vacuum forming and thermoforming processes. The shaping and dimensions of the bubbles 18, 24 using vacuum forming and/or thermoforming processes can be customized to the specific needs of the product and/or consumer or user requirements. Such specific needs include, for example, but are not limited to, opening force and speed of the valve structure 10, closing (i.e., shut-off) force and speed of the valve 10, and viscosity of contents (if liquid; solid contents are also possible) in a package.

The dispensing chamber 26 is formed by a second thermoformer in at least the channel film layer 106. In some embodiments, the dispensing chamber 26 is formed from a thicker film than the metering bubble 18 and the dispensing bubble 24. The bubbles 18, 24 are made of, for example, but not limited to, polyethylene and/or polypropylene or a combination thereof; the dispensing chamber is formed from, for example, but not limited to, silicone.

The polymeric or similar sheet material for the base film layer 108 is sealed to the bubble film layer 12 by a first ultrasonic sealer (i.e., applying bubble seal). The polymeric or similar sheet material for the channel film layer 106 is sealed to the combination of the layers 108, 12 by a second ultrasonic sealer 316 (i.e., applying channel seal).

Thus, the several aforementioned objects and advantages are most effectively attained. Although preferred embodiments of the invention have been disclosed and described in detail herein, it should be understood that this invention is limited by the appended claims.

## Claims

1. A valve structure (10), comprising:
a fluid flow path from a first end of the valve structure (10) to a second end of the valve structure (10);
the flow path including a first valve on a first end of the valve structure and a second valve on the second end of the valve structure;
a dispensing chamber (26) defined between the first valve and the second valve;
the first valve being a one-way valve which passes contents from the first end of the valve structure to the dispensing chamber (26); and
the second valve passing contents from the dispensing chamber through a portion of the flow pathway to the second end of the valve structure upon application of pressure to the dispensing chamber (26),
**characterised in that** the first valve is a first protruding closure device, and **in that** the first protruding closure device contains a first bubble (18) containing a first fluid.

2. A package (100) for holding and dispensing a metered contents, comprising:
a first panel portion (106) made of flexible material;
a second panel portion (108) made of flexible material, the first panel portion (106) and the second panel portion (108) defining a storage volume;
a storage access portion (104), defined by a portion of the first and second panel portions, defining a flow pathway for communicating from the storage volume to an exterior of the package;
the storage access portion (104) including a dispensing chamber (26) defined by a first valve on a product side of the dispensing chamber and a second valve on a consumer side of the dispensing chamber,
the first valve being a one-way valve which passes contents from the storage volume to the dispensing chamber (26) upon application of pressure to a portion of the package; and
the second valve passing contents from the dispensing chamber (26) through a portion of the flow pathway to an exterior of the package upon application of pressure to the dispensing chamber (26), wherein the storage access portion is narrower than the storage volume,
**characterised in that** the first valve is a first protruding closure device, and **in that** the first protruding closure device contains a first bubble (18) containing a first fluid.

3. The valve structure (10) of claim 1 or the package (100) of Claim 2 wherein the first fluid is a gas.

4. The valve structure (10) of claim 1 or the package (100) of Claim 2 wherein the second valve is a second closure device.

5. The valve structure (10) or the package (100) of Claim 4 wherein the second closure device contains a second bubble (24) containing a second fluid.

6. The valve structure (10) or the package (100) of Claim 5 wherein the second fluid is a gas.

7. The package (100) of Claim 4 wherein a bubble layer of film (12) is positioned between the first (106) and second (108) panel portions within the storage access portion (104), the bubble layer (12) being sealed to at least one of the first (106) and second (108) panel portions thereby forming the first (18) and second (24) bubbles.

8. The valve structure (10) of Claim 1 or the package (100) of claim 2 wherein the first valve includes:
a first profile with a first flange (40) and a first sealing lip (46) extending from the first flange (40); a second profile with a second flange (50) and a second sealing lip (56) extending from the second flange (50);
wherein distal ends of the first and second sealing lips (46, 56) are joined together at an apex (60).

9. The valve structure (10) or the package (100) of Claim 8 wherein the first profile is attached to a first of the first and second semi-rigid profiles (70, 72) and the second profile is sealed to a second of the first and second semi-rigid profiles (70, 72), wherein the apex (60) points toward a consumer side of the package or toward the second end of the valve structure.

## Patentansprüche

1. Ventilstruktur (10), aufweisend:
einen Fluidströmungspfad von einem ersten Ende der Ventilstruktur (10) zu einem zweiten Ende der Ventilstruktur (10);
wobei der Strömungspfad ein erstes Ventil an einem ersten Ende der Ventilstruktur und ein zweites Ventil an dem zweiten Ende der Ventilstruktur beinhaltet;
eine Ausgabekammer (26), die zwischen dem ersten Ventil und dem zweiten Ventil definiert ist;
wobei das erste Ventil ein Einwegventil ist, das Inhalte von dem ersten Ende der Ventilstruktur zu der Ausgabekammer (26) leitet; und
wobei das zweite Ventil Inhalte aus der Ausgabekammer durch einen Abschnitt des Strömungswegs zu dem zweiten Ende der Ventilstruktur leitet, wenn Druck auf die Ausgabekammer (26) ausgeübt wird,
**dadurch gekennzeichnet, dass** das erste Ventil eine erste vorstehende Verschlussvorrichtung ist, und dadurch, dass die erste vorstehende Verschlussvorrichtung eine erste Blase (18) enthält, die ein erstes Fluid enthält.

2. Verpackung (100) zum Halten und Ausgeben von dosierten Inhalten, aufweisend:
einen ersten Plattenabschnitt (106), der aus flexiblem Material hergestellt ist;
einen zweiten Plattenabschnitt (108), der aus flexiblem Material hergestellt ist, wobei der erste Plattenabschnitt (106) und der zweite Plattenabschnitt (108) ein Speichervolumen definieren;
einen Speicherzugangsabschnitt (104), definiert durch einen Abschnitt des ersten und des zweiten Plattenabschnitts, der einen Strömungsweg zum Kommunizieren von dem Speichervolumen zu einer Außenseite der Verpackung definiert;
wobei der Speicherzugangsabschnitt (104) eine Ausgabekammer (26) beinhaltet, die durch ein erstes Ventil auf einer Produktseite der Ausgabekammer und ein zweites Ventil auf einer Verbraucherseite der Ausgabekammer definiert ist;
wobei das erste Ventil ein Einwegventil ist, das Inhalte aus dem Speichervolumen zu der Ausgabekammer (26) leitet, wenn Druck auf einen Abschnitt der Verpackung ausgeübt wird; und
wobei das zweite Ventil Inhalte aus der Ausgabekammer (26) durch einen Abschnitt des Strömungswegs zu einer Außenseite der Verpackung leitet, wenn Druck auf die Ausgabekammer (26) ausgeübt wird, wobei der Speicherzugangsabschnitt schmaler als das Speichervolumen ist,
**dadurch gekennzeichnet, dass** das erste Ventil eine erste vorstehende Verschlussvorrichtung ist, und dadurch, dass die erste vorstehende Verschlussvorrichtung eine erste Blase (18) enthält, die ein erstes Fluid enthält.

3. Ventilstruktur (10) nach Anspruch 1 oder Verpackung (100) nach Anspruch 2, wobei das erste Fluid ein Gas ist.

4. Ventilstruktur (10) nach Anspruch 1 oder Verpackung (100) nach Anspruch 2, wobei das zweite Ventil eine zweite Verschlussvorrichtung ist.

5. Ventilstruktur (10) oder Verpackung (100) nach Anspruch 4, wobei die zweite Verschlussvorrichtung eine zweite Blase (24) enthält, die ein zweites Fluid enthält.

6. Ventilstruktur (10) oder Verpackung (100) nach Anspruch 5, wobei das zweite Fluid ein Gas ist.

7. Verpackung (100) nach Anspruch 4, wobei eine Blasenschicht aus Folie (12) zwischen dem ersten (106) und dem zweiten (108) Plattenabschnitt innerhalb des Speicherzugangsabschnitts (104) positioniert ist, wobei die Blasenschicht (12) mit zumindest einem von dem ersten (106) und dem zweiten (108) Plattenabschnitt dicht verbunden ist, wodurch die erste (18) und die zweite (24) Blase gebildet wird.

8. Ventilstruktur (10) nach Anspruch 1 oder Verpackung (100) nach Anspruch 2, wobei das erste Ventil beinhaltet:
ein erstes Profil mit einem ersten Flansch (40) und einer ersten Dichtlippe (46), die sich von dem ersten Flansch (40) erstreckt; ein zweites Profil mit einem zweiten Flansch (50) und einer zweiten Dichtlippe (56), die sich von dem zweiten Flansch (50) erstreckt;
wobei distale Enden der ersten und der zweiten Dichtlippe (46, 56) an einem Scheitel (60) miteinander verbunden sind.

9. Ventilstruktur (10) oder Verpackung (100) nach Anspruch 8, wobei das erste Profil an einem ersten von dem ersten und dem zweiten halbstarren Profil (70, 72) angebracht ist, und das zweite Profil mit einem zweiten von dem ersten und dem zweiten halbstarren Profil (70, 72) dicht verbunden ist, wobei der Scheitel (60) hin zu einer Verbraucherseite der Verpackung oder hin zu dem zweiten Ende der Ventilstruktur zeigt.

## Revendications

1. Structure de distributeur (10), comprenant :
un trajet d'écoulement de fluide à partir d'une première extrémité de la structure de distributeur (10) jusqu'à une deuxième extrémité de la structure de distributeur (10) ;
le trajet d'écoulement comprenant un premier distributeur sur une première extrémité de la structure de distributeur et un deuxième distributeur sur la deuxième extrémité de la structure de distributeur ;
une chambre de distribution (26) définie entre le premier distributeur et le deuxième distributeur ;
le premier distributeur étant un clapet anti-retour qui fait passer le contenu à partir de la première extrémité de la structure de distributeur à la chambre de distribution (26) ; et
le deuxième distributeur faisant passer le contenu de la chambre de distribution à travers une partie du passage d'écoulement vers la deuxième extrémité de la structure de distributeur lors de l'application d'une pression à la chambre de distribution (26),
**caractérisé en ce que** le premier distributeur est un premier dispositif de fermeture saillante, et **en ce que** le premier dispositif de fermeture saillante contient une première bulle (18) contenant un premier fluide.

2. Emballage (100) pour le maintien et la distribution d'un contenu mesuré, comprenant :
une première partie de panneau (106) réalisée en matériau flexible ;
une deuxième partie de panneau (108) réalisée en matériau flexible, la première partie de panneau (106) et la deuxième partie de panneau (108) définissant un volume de stockage ;
une partie d'accès de stockage (104), définie par une partie des première et deuxième parties de panneau, définissant un trajet d'écoulement pour la communication à partir du volume de stockage jusqu'à un extérieur de l'emballage ;
la partie d'accès de stockage (104) comprenant une chambre de distribution (26) définie par un deuxième distributeur sur un côté de produit de la chambre de distribution et un deuxième distributeur sur un côté de consommateur de la chambre de distribution ;
le premier distributeur étant un clapet anti-retour qui fait passer le contenu à partir du volume de stockage jusqu'à la chambre de distribution (26) lors de l'application d'une pression à une partie de l'emballage ; et
le deuxième distributeur faisant passer le contenu de la chambre de distribution (26) à travers une partie du passage d'écoulement vers l'extérieur de l'emballage lors de l'application d'une pression à la chambre de distribution (26), dans lequel la partie d'accès de stockage est plus étroite que le volume de stockage,
**caractérisé en ce que** le premier distributeur est un premier dispositif de fermeture saillante, et **en ce que** le premier dispositif de fermeture saillante contient une première bulle (18) contenant un premier fluide.

3. Structure de distributeur (10) selon la revendication 1 ou emballage (100) selon la revendication 2, dans lequel le premier fluide est un gaz.

4. Structure de distributeur (10) selon la revendication 1 ou emballage (100) selon la revendication 2, dans lequel le deuxième distributeur est un deuxième dispositif de fermeture.

5. Structure de distributeur (10) ou emballage (100) selon la revendication 4, dans lequel le deuxième dispositif de fermeture contient une deuxième bulle (24) contenant un deuxième fluide.

6. Structure de distributeur (10) ou emballage (100) selon la revendication 5, dans lequel le deuxième fluide est un gaz.

7. Emballage (100) selon la revendication 4, dans lequel une couche à bulles de film (12) est positionnée entre les première (106) et deuxième (108) parties de panneau à l'intérieur de la partie d'accès au stockage (104), la couche à bulles (12) étant scellée à au moins une parmi les première (106) et deuxième (108) parties de panneau, formant ainsi les première (18) et deuxième (24) bulles.

8. Structure de distributeur (10) selon la revendication 1 ou emballage (100) selon la revendication 2, dans lequel le premier distributeur comprend :
un premier profil avec une première bride (40) et une première lèvre d'étanchéité (46) s'étendant à partir de la première bride (40) ; un deuxième profil avec une deuxième bride (50) et une deuxième lèvre d'étanchéité (56) s'étendant à partir de la deuxième bride (50) ;
dans lequel les extrémités distales des première et deuxième lèvres d'étanchéité (46, 56) sont jointes ensemble sur un sommet (60).

9. Structure de distributeur (10) ou emballage (100) selon la revendication 8, dans lequel le premier profil est fixé à un premier parmi les premier et deuxième profils semi-rigides (70, 72) et le deuxième profil est scellé à un deuxième parmi les premier et deuxième profils semi-rigides (70, 72), dans lequel le sommet (60) pointe vers un côté consommateur de l'emballage ou vers la deuxième extrémité de la structure de distributeur.
